# EUROPEAN PATENT APPLICATION

(11) **EP 3 726 443 A1**
(43) Date of publication of application: **21.10.2020**
(21) Application number: 18888276.5
(22) Date of filing: 06.12.2018
(51) Int. Cl.: G06Q 10/08, G06Q 50/28

(54) **SYSTEM AND METHOD FOR ON-BOARD PICK-UP OF EXPRESS DELIVERY ORDER AND ON-BOARD DELIVERY OF EXPRESS DELIVERY ORDER**

(30) Priority: 15.12.2017 CN 201711345197
(71) Applicant: Nio Nextev Limited, Hong Kong (CN)
(72) Inventor: ZHAO, Hanqing, Hong Kong (CN); ZHU, Hao, Hong Kong (CN); WENG, Yujian, Hong Kong (CN); SHI, Junjie, Hong Kong (CN); WANG, Ying, Hong Kong (CN)
(74) Representative: Hansson Thyresson AB
(86) International application number: PCT/CN2018/119556
(87) International publication number: WO 2019/114601

(57) **Abstract**

Disclosed are a system and method for picking up a parcel from a vehicle, a system and method for delivering a parcel to a vehicle, and a remote vehicle service system and method. Taking the system for picking up a parcel from a vehicle as an example, the system comprises a first terminal (101), a second terminal (102), and a remote vehicle service system (103), wherein the first terminal (101) comprises an order-placing unit (101A) configured to send an order-placing request containing an in-vehicle pickup instruction for a corresponding vehicle; the second terminal (102) comprises a pickup unit (102A) configured to send, based on the received in-vehicle pickup instruction for the corresponding vehicle, a first vehicle search request for the corresponding vehicle to the remote vehicle service system, and receive a real-time pickup vehicle position of the corresponding vehicle; and the remote vehicle service system (103) comprises an order-placing subsystem (103A) configured to send the order-placing request to a third-party express system, and associate the real-time pickup vehicle position of the corresponding vehicle in response to the received first vehicle search request for the corresponding vehicle from the second terminal (102). The systems and methods can help a courier to find the vehicle as quickly and accurately as possible, are conducive to successfully completing the operation of picking up a parcel from a vehicle and/or delivering a parcel to a vehicle, and bring more convenience for the user to use the vehicle.

## Description

### Technical Field

The invention relates to the field of automobiles, and in particular to a system and method for picking up a parcel from a vehicle, a system and method for delivering a parcel to a vehicle, and a corresponding remote vehicle service system and method.

### Background Art

Nowadays, people's enthusiasm for on-line shopping has driven the rapid development of the express and logistics industry. According to the usual habits of people, a parcel is always sent to a fixed address or received from a fixed address. In addition, in case where a courier delivers goods to the door, the sender or receiver is often very busy or is currently absent from the address recorded on the sending or receipt list, which makes it inconvenient to send or receive the parcel. Moreover, this requires face-to-face handover, and tends to cause a delay.

In order to solve the above problems, the use of a trunk of a vehicle as a storage point for sending and receiving parcels will bring great convenience to the parcel pickup and delivery and the owner.

However, due to the uncertainty of vehicle positions, the lag in the vehicle networking technology, and the extremely limited battery capacity of ordinary fuel vehicles, the vehicle cannot be kept online for a long time, and it is relatively difficult for the courier to search for the vehicle, and open the vehicle door to deliver or pick up a parcel.

### Summary of the Invention

The invention is implemented to overcome one or more of the above shortcomings or other shortcomings, and the adopted technical solutions are as follows.

According to a first aspect of the invention, a system for picking up a parcel from a vehicle is provided, which comprises a first terminal, a second terminal, and a remote vehicle service system, wherein the first terminal comprises: an order-placing unit configured to send an order-placing request containing an in-vehicle pickup instruction for a corresponding vehicle; the second terminal comprises: a pickup unit configured to send, based on the received in-vehicle pickup instruction for the corresponding vehicle, a first vehicle search request for the corresponding vehicle to the remote vehicle service system, and receive a real-time pickup vehicle position of the corresponding vehicle; and the remote vehicle service system comprises: an order-placing subsystem configured to send the order-placing request to a third-party express system, and associate the real-time pickup vehicle position of the corresponding vehicle in response to the received first vehicle search request for the corresponding vehicle from the second terminal.

Further, in the first aspect according to the invention, the remote vehicle service system further comprises: a vehicle remote control subsystem configured to control the corresponding vehicle based on the in-vehicle pickup instruction.

Further, in the first aspect according to the invention, the vehicle remote control subsystem instructs, in response to the received first vehicle search request, the corresponding vehicle to send a prompt signal.

Further, in the first aspect according to the invention, the vehicle remote control subsystem instructs, in response to a received first unlocking request for the corresponding vehicle from the second terminal, the corresponding vehicle to perform an unlocking operation.

Further, in the first aspect according to the invention, the first terminal further comprises: a first input unit used by a first terminal user to input an address indicating a pickup vehicle position; and an address check unit configured to check the validity of the input address, wherein the order-placing unit sends, when the input address is checked to be valid, the order-placing request containing the in-vehicle pickup instruction for the corresponding vehicle.

Further, in the first aspect according to the invention, the second terminal further comprises: a pickup list information verification unit configured to verify security information related to a pickup list from the third-party express system, wherein the pickup unit sends, based on the received in-vehicle pickup instruction for the corresponding vehicle when the verification on the security information succeeds, the first vehicle search request for the corresponding vehicle to the remote vehicle service system.

According to a second aspect of the invention, a system for delivering a parcel to a vehicle is provided, which comprises a first terminal, a second terminal, and a remote vehicle service system, wherein the first terminal comprises: an order-receiving unit configured to send an in-vehicle receiving instruction for a corresponding vehicle in response to an order-receiving notification from a third-party express system; the second terminal comprises: a delivery unit configured to send, based on the received in-vehicle receiving instruction for the corresponding vehicle, a second vehicle search request for the corresponding vehicle to the remote vehicle service system, and receive a real-time receiving vehicle position of the corresponding vehicle; and the remote vehicle service system comprises: an order-receiving subsystem configured to send the in-vehicle receiving instruction to the third-party express system, and associate the real-time receiving vehicle position of the corresponding vehicle in response to the received second vehicle search request for the corresponding vehicle from the second terminal.

Further, in the second aspect according to the invention, the remote vehicle service system further comprises: a vehicle remote control subsystem configured to control the corresponding vehicle based on the in-vehicle receiving instruction.

Further, in the second aspect according to the invention, the vehicle remote control subsystem instructs, in response to the received second vehicle search request, the corresponding vehicle to send a prompt signal.

Further, in the second aspect according to the invention, the vehicle remote control subsystem instructs, in response to a received second unlocking request for the corresponding vehicle from the second terminal, the corresponding vehicle to perform an unlocking operation.

Further, in the second aspect according to the invention, the first terminal further comprises: a display unit configured to display, to a first terminal user based on the order-receiving notification, selection information about whether a parcel needs to be delivered to the vehicle; and an input unit used by the first terminal user to input a selection result about whether the parcel needs to be delivered to the vehicle, wherein the order-receiving unit sends the in-vehicle receiving instruction for the corresponding vehicle in response to the order-receiving notification from the third-party express system when the first terminal user selects to deliver the parcel to the vehicle.

Further, in the second aspect according to the invention, the order-receiving subsystem sends, in response to the received in-vehicle receiving instruction from the first terminal, an address indicating a receiving vehicle position to the third-party express system together with the in-vehicle receiving instruction.

Further, in the second aspect according to the invention, the second terminal further comprises: a receipt list information verification unit configured to verify security information related to a receipt list from the third-party express system, wherein the delivery unit sends, based on the received in-vehicle receiving instruction for the corresponding vehicle when the verification on the security information succeeds, the second vehicle search request for the corresponding vehicle to the remote vehicle service system.

According to a third aspect of the invention, a method for picking up a parcel from a vehicle is provided, which comprises the steps of: sending an order-placing request containing an in-vehicle pickup instruction for a corresponding vehicle; sending the order-placing request to a third-party express system; sending, based on the received in-vehicle pickup instruction for the corresponding vehicle, a first vehicle search request for the corresponding vehicle; associating a real-time pickup vehicle position of the corresponding vehicle in response to the received first vehicle search request for the corresponding vehicle; and receiving the real-time pickup vehicle position of the corresponding vehicle.

Further, in the third aspect according to the invention, the method further comprises the step of: controlling the corresponding vehicle based on the in-vehicle pickup instruction.

Further, in the third aspect according to the invention, the method further comprises the step of: instructing, in response to the received first vehicle search request, the corresponding vehicle to send a prompt signal.

Further, in the third aspect according to the invention, the method further comprises the step of: instructing, in response to a received first unlocking request for the corresponding vehicle, the corresponding vehicle to perform an unlocking operation.

Further, in the third aspect according to the invention, the method further comprises the steps of: inputting an address indicating a pickup vehicle position; and checking the validity of the input address, and sending, when the input address is checked to be valid, the order-placing request containing the in-vehicle pickup instruction for the corresponding vehicle.

Further, in the third aspect according to the invention, the method further comprises the steps of: verifying security information related to a pickup list from the third-party express system, and sending, based on the received in-vehicle pickup instruction for the corresponding vehicle when the verification on the security information succeeds, the first vehicle search request for the corresponding vehicle.

According to a fourth aspect of the invention, a method for delivering a parcel to a vehicle is provided, which comprises the steps of: sending an in-vehicle receiving instruction for a corresponding vehicle in response to an order-receiving notification from a third-party express system; sending the in-vehicle receiving instruction to the third-party express system; sending, based on the received in-vehicle receiving instruction for the corresponding vehicle, a second vehicle search request for the corresponding vehicle; associating a real-time receiving vehicle position of the corresponding vehicle in response to the received second vehicle search request for the corresponding vehicle from a second terminal; and receiving the real-time receiving vehicle position of the corresponding vehicle.

Further, in the fourth aspect according to the invention, the method further comprises the step of: controlling the corresponding vehicle based on the in-vehicle receiving instruction.

Further, in the fourth aspect according to the invention, the method further comprises the step of: instructing, in response to the received second vehicle search request, the corresponding vehicle to send a prompt signal.

Further, in the fourth aspect according to the invention, the method further comprises the step of: instructing, in response to a received second unlocking request for the corresponding vehicle, the corresponding vehicle to perform an unlocking operation.

Further, in the fourth aspect according to the invention, the method further comprises the steps of: displaying, based on the order-receiving notification, selection information about whether a parcel needs to be delivered to the vehicle; and inputting a selection result about whether the parcel needs to be delivered to the vehicle, and sending the in-vehicle receiving instruction for the corresponding vehicle in response to the order-receiving notification from the third-party express system when selecting to deliver the parcel to the vehicle.

Further, in the fourth aspect according to the invention, in response to the received in-vehicle receiving instruction from a first terminal, an address indicating a receiving vehicle position is sent to the third-party express system together with the in-vehicle receiving instruction.

Further, in the fourth aspect according to the invention, the method further comprises the steps of: verifying security information related to a receipt list from the third-party express system, and sending, based on the received in-vehicle receiving instruction for the corresponding vehicle when the verification on the security information succeeds, the second vehicle search request for the corresponding vehicle.

According to a fifth aspect of the invention, a system is provided, which comprises: an order-placing unit configured to send an order-placing request containing an in-vehicle pickup instruction for a corresponding vehicle; and/or an order-receiving unit configured to send an in-vehicle receiving instruction for the corresponding vehicle in response to an order-receiving notification from a third-party express system.

Further, in the fifth aspect according to the invention, the system further comprises: a first input unit used by a first terminal user to input an address indicating a pickup vehicle position; and an address check unit configured to check the validity of the input address, wherein the order-placing unit sends, when the input address is checked to be valid, the order-placing request containing the in-vehicle pickup instruction for the corresponding vehicle.

Further, in the fifth aspect according to the invention, the system further comprises: a display unit configured to display, to a first terminal user based on the order-receiving notification, selection information about whether a parcel needs to be delivered to the vehicle; and an input unit used by the first terminal user to input a selection result about whether the parcel needs to be delivered to the vehicle, wherein the order-receiving unit sends the in-vehicle receiving instruction for the corresponding vehicle in response to the order-receiving notification from the third-party express system when the first terminal user selects to deliver the parcel to the vehicle.

Further, in the fifth aspect according to the invention, the system is implemented as an application.

According to a sixth aspect of the invention, a system is provided, which comprises: a pickup unit configured to send, based on a received in-vehicle pickup instruction for a corresponding vehicle, a first vehicle search request for the corresponding vehicle to a remote vehicle service system, and receive a real-time pickup vehicle position of the corresponding vehicle; and/or a delivery unit configured to send, based on a received in-vehicle receiving instruction for the corresponding vehicle, a second vehicle search request for the corresponding vehicle to the remote vehicle service system, and receive a real-time receiving vehicle position of the corresponding vehicle.

Further, in the sixth aspect according to the invention, the system further comprises: a pickup list information verification unit configured to verify security information related to a pickup list from a third-party express system, wherein the pickup unit sends, based on the received in-vehicle pickup instruction for the corresponding vehicle when the verification on the security information succeeds, the first vehicle search request for the corresponding vehicle to the remote vehicle service system.

Further, in the sixth aspect according to the invention, the system further comprises: a receipt list information verification unit configured to verify security information related to a receipt list from the third-party express system, wherein the delivery unit sends, based on the received in-vehicle receiving instruction for the corresponding vehicle when the verification on the security information succeeds, the second vehicle search request for the corresponding vehicle to the remote vehicle service system.

Further, in the sixth aspect according to the invention, the system is implemented as an application.

According to a seventh aspect of the invention, a remote vehicle service system is provided, which comprises: an order-placing subsystem configured to send an order-placing request to a third-party express system, and associate a real-time pickup vehicle position of a corresponding vehicle in response to a received first vehicle search request for the corresponding vehicle from a second terminal; and an order-receiving subsystem configured to send an in-vehicle receiving instruction to the third-party express system, and associate a real-time receiving vehicle position of the corresponding vehicle in response to a received second vehicle search request for the corresponding vehicle from the second terminal.

Further, in the seventh aspect according to the invention, the remote vehicle service system further comprises: a vehicle remote control subsystem configured to control the corresponding vehicle based on an in-vehicle pickup instruction/the in-vehicle receiving instruction.

Further, in the seventh aspect according to the invention, the vehicle remote control subsystem instructs, in response to the received first vehicle search request/second vehicle search request, the corresponding vehicle to send a prompt signal.

Further, in the seventh aspect according to the invention, the vehicle remote control subsystem instructs, in response to a received first unlocking request/second unlocking request for the corresponding vehicle from the second terminal, the corresponding vehicle to perform an unlocking operation.

Further, in the seventh aspect according to the invention, the order-receiving subsystem sends, in response to the received in-vehicle receiving instruction from a first terminal, an address indicating a receiving vehicle position to the third-party express system together with the in-vehicle receiving instruction.

According to an eighth aspect of the invention, a method is provided, which comprises the steps of: sending an order-placing request containing an in-vehicle pickup instruction for a corresponding vehicle; and sending an in-vehicle receiving instruction for the corresponding vehicle in response to an order-receiving notification from a third-party express system.

Further, in the eighth aspect according to the invention, the method further comprises the steps of: inputting an address indicating a pickup vehicle position; and checking the validity of the input address, and sending, when the input address is checked to be valid, the order-placing request containing the in-vehicle pickup instruction for the corresponding vehicle.

Further, in the eighth aspect according to the invention, the method further comprises the steps of: displaying, based on the order-receiving notification, selection information about whether a parcel needs to be delivered to the vehicle; and inputting a selection result about whether the parcel needs to be delivered to the vehicle, and sending the in-vehicle receiving instruction for the corresponding vehicle in response to the order-receiving notification from the third-party express system when selecting to deliver the parcel to the vehicle.

According to a ninth aspect of the invention, a method is provided, which comprises: sending, based on a received in-vehicle pickup instruction for a corresponding vehicle, a first vehicle search request for the corresponding vehicle; receiving a real-time pickup vehicle position of the corresponding vehicle; sending, based on a received in-vehicle receiving instruction for the corresponding vehicle, a second vehicle search request for the corresponding vehicle; and receiving a real-time receiving vehicle position of the corresponding vehicle.

Further, in the ninth aspect according to the invention, the method further comprises the steps of: verifying security information related to a pickup list from a third-party express system, and sending, based on the received in-vehicle pickup instruction for the corresponding vehicle when the verification on the security information succeeds, the first vehicle search request for the corresponding vehicle.

Further, in the ninth aspect according to the invention, the method further comprises the steps of: verifying security information related to a receipt list from the third-party express system, and sending, based on the received in-vehicle receiving instruction for the corresponding vehicle when the verification on the security information succeeds, the second vehicle search request for the corresponding vehicle.

According to a tenth aspect of the invention, a method is provided, which comprises: sending an order-placing request to a third-party express system; associating a real-time pickup vehicle position of a corresponding vehicle in response to a received first vehicle search request for the corresponding vehicle; sending an in-vehicle receiving instruction to the third-party express system; and associating a real-time receiving vehicle position of the corresponding vehicle in response to a received second vehicle search request for the corresponding vehicle from a second terminal.

Further, in the tenth aspect according to the invention, the method further comprises the step of: controlling the corresponding vehicle based on an in-vehicle pickup instruction/the in-vehicle receiving instruction.

Further, in the tenth aspect according to the invention, the method further comprises the step of: instructing, in response to the received first vehicle search request/second vehicle search request, the corresponding vehicle to send a prompt signal.

Further, in the tenth aspect according to the invention, the method further comprises the step of: instructing, in response to a received first unlocking request/second unlocking request for the corresponding vehicle, the corresponding vehicle to perform an unlocking operation.

Further, in the tenth aspect according to the invention, in response to the received in-vehicle receiving instruction from a first terminal, an address indicating a receiving vehicle position is sent to the third-party express system together with the in-vehicle receiving instruction.

According to an eleventh aspect of the invention, a remote vehicle service system for picking up a parcel from a vehicle and/or delivering a parcel to a vehicle is provided, which comprises: an order-placing subsystem configured to send an order-placing request from a first terminal to a third-party express system, and associate a real-time pickup vehicle position of a corresponding vehicle in response to a received first vehicle search request for the corresponding vehicle from a second terminal; and/or an order-receiving subsystem configured to send an in-vehicle receiving instruction from the first terminal to the third-party express system, and associate a real-time receiving vehicle position of a corresponding vehicle in response to a received second vehicle search request for the corresponding vehicle from the second terminal.

Further, in the eleventh aspect according to the invention, the remote vehicle service system further comprises: a vehicle remote control subsystem configured to control the corresponding vehicle based on an in-vehicle pickup instruction from the first terminal, and/or control the corresponding vehicle based on the in-vehicle receiving instruction from the first terminal.

Further, in the eleventh aspect according to the invention, the vehicle remote control subsystem instructs, in response to the received first vehicle search request, the corresponding vehicle to send a prompt signal, and/or the vehicle remote control subsystem instructs, in response to the received second vehicle search request, the corresponding vehicle to send a prompt signal.

Further, in the eleventh aspect according to the invention, the vehicle remote control subsystem instructs, in response to a received first unlocking request for the corresponding vehicle from the second terminal, the corresponding vehicle to perform an unlocking operation, and/or the vehicle remote control subsystem instructs, in response to a received second unlocking request for the corresponding vehicle from the second terminal, the corresponding vehicle to perform an unlocking operation.

According to a twelfth aspect of the invention, a remote vehicle service method for picking up a parcel from a vehicle and/or delivering a parcel to a vehicle is provided, which comprises: an order-placing step for sending an order-placing request from a first terminal to a third-party express system, and associating a real-time pickup vehicle position of a corresponding vehicle in response to a received first vehicle search request for the corresponding vehicle from a second terminal; and/or an order-receiving step for sending an in-vehicle receiving instruction from the first terminal to the third-party express system, and associating a real-time receiving vehicle position of a corresponding vehicle in response to a received second vehicle search request for the corresponding vehicle from the second terminal.

Further, in the twelfth aspect according to the invention, the remote vehicle service method further comprises: a vehicle remote control step for controlling the corresponding vehicle based on an in-vehicle pickup instruction from the first terminal, and/or controlling the corresponding vehicle based on the in-vehicle receiving instruction from the first terminal.

Further, in the twelfth aspect according to the invention, the vehicle remote control step comprises instructing, in response to the received first vehicle search request, the corresponding vehicle to send a prompt signal, and/or the vehicle remote control step comprises instructing, in response to the received second vehicle search request, the corresponding vehicle to send a prompt signal.

Further, in the twelfth aspect according to the invention, the vehicle remote control step comprises instructing, in response to a received first unlocking request for the corresponding vehicle from the second terminal, the corresponding vehicle to perform an unlocking operation, and/or the vehicle remote control step comprises instructing, in response to a received second unlocking request for the corresponding vehicle from the second terminal, the corresponding vehicle to perform an unlocking operation.

Compared with the prior art, the invention can obtain one or more of the following beneficial effects:
1) The invention can realize the operation of picking up a parcel from a vehicle and/or delivering a parcel to a vehicle in combination with the characteristic that an electric vehicle can be kept online due to a large amount of power supply.
2) According to the invention, the vehicle search and vehicle unlocking functions are realized by means of a first terminal, a second terminal, and a remote vehicle service system, which can help a courier to determine the real-time position of the vehicle as soon as possible and help the courier to find the vehicle accurately, and are conducive to successfully completing the operation of picking up a parcel from a vehicle and/or delivering a parcel to a vehicle.
3) According to the invention, by security measures, for example, authenticating a courier's permission and immediately withdrawing, by a remote vehicle service system, the permission to open a vehicle door immediately after the courier opens the vehicle door, so that the courier cannot open the vehicle door without permission, the security of picking up a parcel from a vehicle and/or delivering a parcel to a vehicle can be ensured.
4) According to the invention, the vehicle can be used as a third living room by adding the feature of picking up and delivering a parcel, so that the vehicle has other attributes than those of means of transportation, and more convenience is brought for the user to use the vehicle.

### Brief Description of the Drawings

FIG. 1 is an exemplary block diagram of a system for picking up a parcel from a vehicle according to an embodiment of the invention.
FIG. 2 is an exemplary block diagram of a system for delivering a parcel to a vehicle according to an embodiment of the invention.
FIG. 3 is an exemplary time sequence diagram of an order-placing phase in the process of picking up a parcel from a vehicle according to an embodiment of the invention.
FIG. 4 is an exemplary time sequence diagram of a pickup phase in the process of picking up a parcel from a vehicle according to an embodiment of the invention.
FIG. 5 is an exemplary time sequence diagram of a notification phase in the process of delivering a parcel to a vehicle according to an embodiment of the invention.
FIG. 6 is an exemplary time sequence diagram of a delivery phase in the process of delivering a parcel to a vehicle according to an embodiment of the invention.

### Detailed Description of Embodiments

A system and method for picking up a parcel from a vehicle and a system and method for delivering a parcel to a vehicle according to the invention will be described in further detail below with reference to the accompanying drawings. It should be noted that the following detailed description of embodiments are exemplary rather than limiting, and are intended to provide a basic understanding of the invention, and are not intended to confirm key or decisive elements of the invention or limit the scope of protection.

The invention is described below with reference to block diagram illustrations, block diagrams, and/or flowcharts (time sequence diagrams) of the method and the apparatus according to the embodiments of the invention. It should be understood that each block in the flowchart illustrations and/or the block diagrams, and a combination of the flowchart illustrations and/or the block diagrams can be implemented by computer program instructions. These computer program instructions may be provided for a processor of a general-purpose computer, a dedicated computer, or another programmable data processing device to generate a machine, so that the instructions executed by the processor of the computer or the another programmable data processing device create components for implementing the functions/operations specified in these flowcharts and/or blocks and/or one or more flow block diagrams.

These computer program instructions may be stored in a computer readable memory that can instruct a computer or another programmable processor to implement the functions in a specific manner, so that the instructions stored in the computer readable memory generate a manufactured product containing instruction components that implement the functions/operations specified in one or more blocks of the flowchart and/or the block diagram.

These computer program instructions may be loaded onto the computer or the another programmable data processor, so that a series of operations and steps are performed on the computer or the another programmable processor, thereby generating computer-implemented processes. As such, the instructions executed on the computer or the another programmable data processor provide steps for implementing the functions or operations specified in one or more blocks in the flowchart and/or block diagram. It should be further noted that, in some alternative implementations, the functions/operations shown in the blocks may not occur in the order shown in the flowchart. For example, two blocks shown in sequence can actually be executed almost simultaneously or the blocks may sometimes be executed in reverse order, depending on the involved functions/operations.

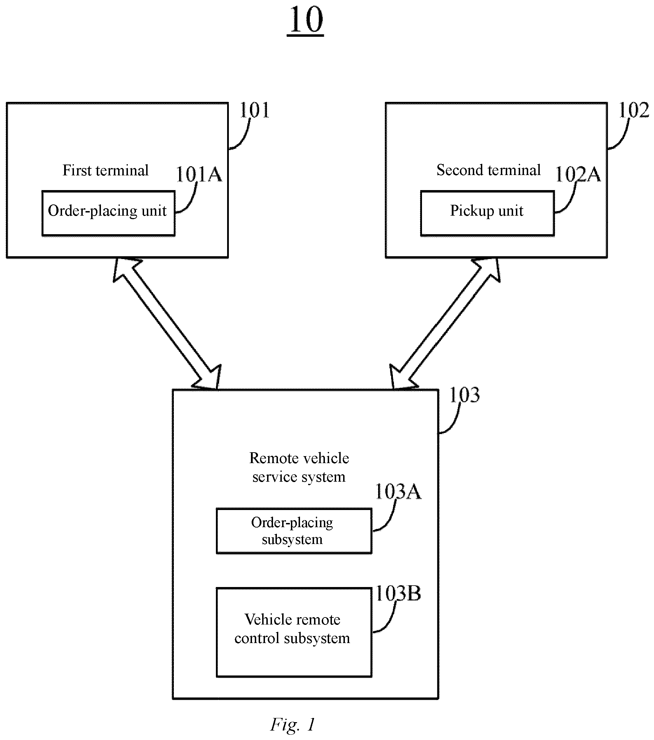

First, a system for picking up a parcel from a vehicle according to an embodiment of the invention will be described with reference to FIG. 1.

As shown in FIG. 1, a system 10 for picking up a parcel from a vehicle comprises a first terminal 101, a second terminal 102, and a remote vehicle service system 103.

It should be understood that the first terminal 101 and the second terminal 102 may include, but are not limited to: mobile terminals having network connection and data transmission functions, such as mobile phones (e.g., Android phones, iOS phones, etc.), and tablet computers. The mobile terminal may also be referred to as user equipment (UE), a terminal, a wireless terminal, a mobile station (MS), etc., which is not limited in the invention.

In one embodiment, the first terminal 101 and the second terminal 102 may interact with the remote vehicle service system 103 through wireless communication.

It should be understood that the wireless communication includes but is not limited to Bluetooth communication, radio frequency communication (such as near field communication (NFC)), wireless fidelity (Wi-Fi) communication, cellular communication (such as 3G, 4G, and 5G), etc.

In the example system 10 shown in FIG. 1 for picking up a parcel from a vehicle, the first terminal 101 may be a terminal used by a user who needs to send a parcel, while the second terminal 102 may be a terminal used by a courier who picks up the parcel.

As shown in FIG. 1, the first terminal 101 comprises a first system that comprises an order-placing unit 101A, wherein the order-placing unit 101A may be configured to send an order-placing request containing an in-vehicle pickup instruction for a corresponding vehicle. For example, in one embodiment, when a user needs to send a parcel and expects a courier to pick up the parcel to be sent from a vehicle, the user may operate the first terminal 101, and the first terminal 101 instructs, in response to the user's operation, the order-placing unit 101A to send an order-placing request containing an in-vehicle pickup instruction for a corresponding vehicle. In addition, for example, in one embodiment, the order-placing unit 101A may be implemented by a hardware module such as a microprocessor, an integrated circuit, a programmable controller, or an arithmetic unit.

Optionally, the first system may further comprise a first input unit (not shown), wherein the first input unit may be used by a user (first terminal user) who needs to send a parcel to input an address indicating a pickup vehicle position. For example, in one embodiment, the first input unit may be implemented by a hardware module such as a touch display screen. Alternatively, in another embodiment, the first input unit may also be implemented by a hardware module such as a physical button or a physical key.

Further optionally, the first system may further comprise an address check unit (not shown), wherein the address check unit may be configured to check the validity of the input address. Furthermore, when a check result of the address check unit is that the address input by the user is valid, the order-placing unit 101A will send the order-placing request containing the in-vehicle pickup instruction for the corresponding vehicle; otherwise, when the check result of the address check unit is that the address input by the user is invalid, the first terminal 101 will prompt the user that the address is invalid or the like, then the user needs to input an address again, and the order-placing unit 101A starts to operate until the address is determined to be valid. It should be understood that the validity mentioned above includes but is not limited to correctness of an address input format, a correlation between each field of the input address information and a name of each information bar displayed on the first terminal, etc. In addition, for example, in one embodiment, the address check unit may be implemented by a hardware module such as a microprocessor, an integrated circuit, a programmable controller, or an arithmetic unit.

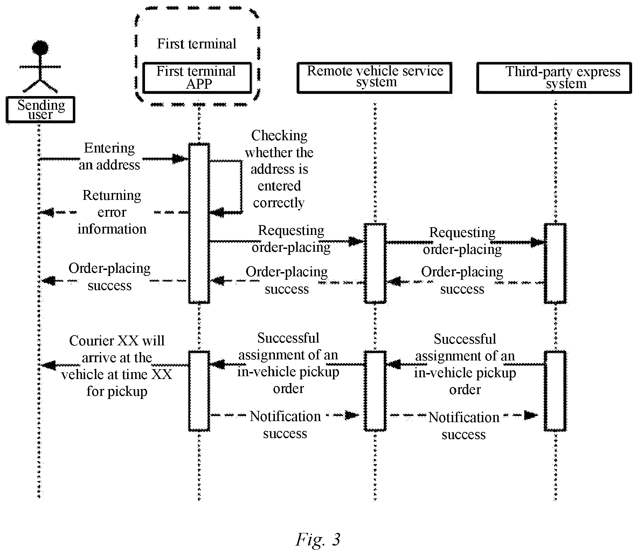

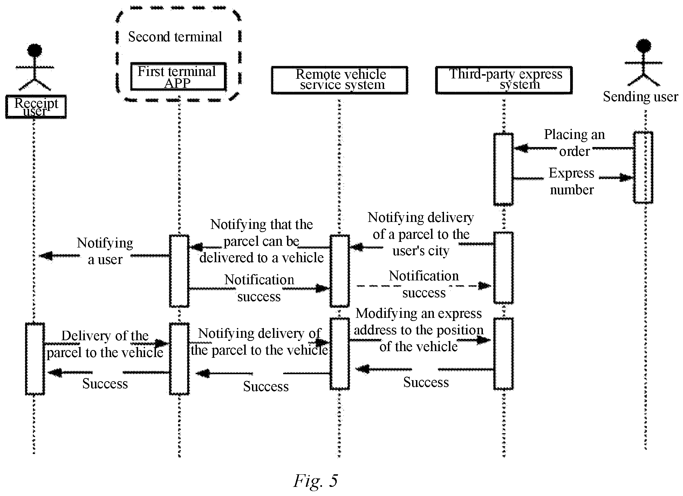

It should be noted that the first system may be implemented in an electronic device such as a mobile phone or a PAD, the first system may be implemented as an application such as a first terminal APP shown in FIGs. 3 and 5 described later, and the application may be installed in the electronic device such as a mobile phone or a PAD.

As shown in FIG. 1, the remote vehicle service system 103 comprises an order-placing subsystem 103A, wherein the order-placing subsystem 103A may be configured to send, in response to the order-placing request containing the in-vehicle pickup instruction for the corresponding vehicle received from the first terminal 101, the order-placing request to a third-party express system (not shown). In one example, the order-placing request may further comprise information about the corresponding vehicle such as a license plate number, a vehicle color, and a vehicle type of the corresponding vehicle.

As described above, the second terminal 102 may be a terminal used by the courier who picks up the parcel. In the example shown in FIG. 1, the second terminal 102 comprises a second system that comprises a pickup unit 102A, wherein the pickup unit 102A may be configured to send, based on the received in-vehicle pickup instruction for the corresponding vehicle, a first vehicle search request for the corresponding vehicle to the remote vehicle service system 103. For example, in the above embodiment, when the courier is assigned a task of in-vehicle pickup from the corresponding vehicle by the third-party express system, the courier may operate the second terminal 102, and the second terminal 102 sends, in response to the courier's operation, the first vehicle search request containing the in-vehicle pickup instruction for the corresponding vehicle to the remote vehicle service system 103. In addition, for example, in one embodiment, the pickup unit 102A may be implemented by a hardware module such as a microprocessor, an integrated circuit, a programmable controller, or an arithmetic unit.

Optionally, the second system may further comprise a pickup list information verification unit (not shown), wherein the pickup list information verification unit may be configured to verify security information related to a pickup list from the third-party express system. When the verification on the security information performed by the pickup list information verification unit succeeds, the pickup unit 102A will send the first vehicle search request for the corresponding vehicle to the remote vehicle service system 103 based on the received in-vehicle pickup instruction for the corresponding vehicle; otherwise, when the verification on the security information performed by the pickup list information verification unit fails, the second terminal 102 will prompt the courier that the verification information is incorrect or the like, then the courier needs to re-acquire and input security information related to the pickup list, and the pickup unit 102A starts to operate until the verification succeeds. In addition, for example, in one embodiment, the pickup list information verification unit may be implemented by a hardware module such as a microprocessor, an integrated circuit, a programmable controller, or an arithmetic unit.

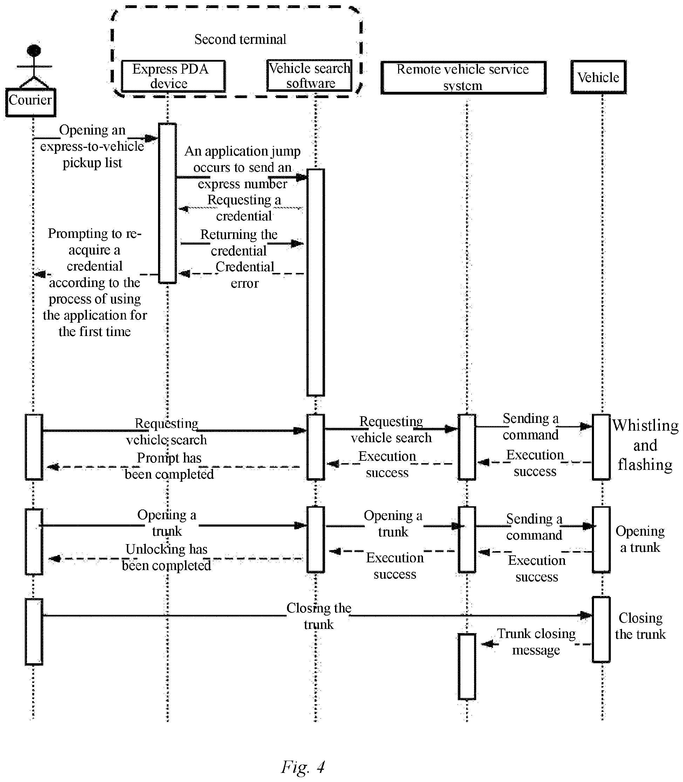

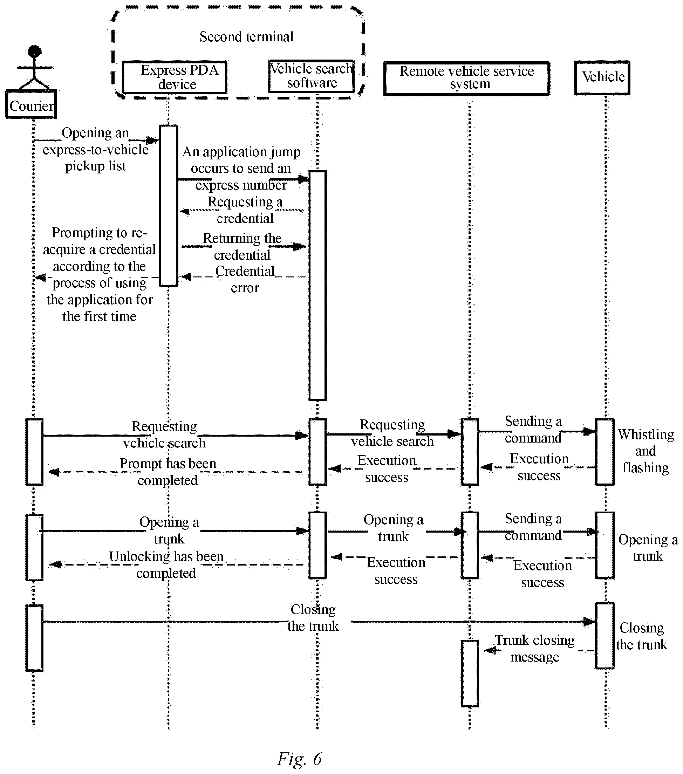

It should be noted that the second system may also be implemented in an electronic device such as a mobile phone or a PAD, the second system may be implemented as an application such as vehicle search software APP shown in FIGs. 4 and 6 described later, and the application may be installed in the electronic device such as a mobile phone or a PAD.

For example, in the above embodiment, the courier may operate the second terminal 102 to open an express-to-vehicle pickup list, and then the second terminal 102 will prompt the courier to input a credential associated with the pickup list for verification, wherein the credential may comprise ID information of the courier, ID information of the second terminal 102, expected door-to-door delivery time, original data information such as an ECU version number and/or an NFC version number, etc. After the courier operates the second terminal 102 to provide the corresponding credential, the pickup list information verification unit will verify the credential provided by the courier. If the credential does not exist or the ID information of the courier and/or the ID information of the second terminal 102 in the credential are different from the ID information of the courier and/or the ID information of the second terminal 102 when the credential is applied for, the second terminal 102 will prompt the courier that the verification information is incorrect, he/she needs to re-apply for a credential, or the like, in which case the courier needs to re-acquire a credential. Otherwise, if there is no problem with the credential, the second terminal 102 will send the first vehicle search request for the corresponding vehicle to the remote vehicle service system 103.

Further, the order-placing subsystem 103A may be further configured to associate a real-time pickup vehicle position of the corresponding vehicle in response to the received first vehicle search request for the corresponding vehicle from the second terminal 102. For example, in one embodiment, the order-placing subsystem 103A may comprise a GPS positioning module, which is used to track the position of the corresponding vehicle in real time and provide the real-time position.

Further, the pickup unit 102A may be further configured to receive the real-time pickup vehicle position of the corresponding vehicle from the remote vehicle service system 103.

In addition, as shown in FIG. 1, the remote vehicle service system 103 may further comprise: a vehicle remote control subsystem 103B, wherein the vehicle remote control subsystem 103B is configured to control the corresponding vehicle based on the above in-vehicle pickup instruction.

Optionally, the vehicle remote control subsystem 103B may be further configured to instruct, in response to the received first vehicle search request, the corresponding vehicle to send a prompt signal. The prompt signal includes but is not limited to vehicle whistling, vehicle flashing, and the like. For example, in the above embodiment, when the courier arrives near the corresponding vehicle according to the real-time pickup vehicle position of the corresponding vehicle provided by the remote vehicle service system 103, in order to prevent the courier from spending too much time on vehicle search, the vehicle remote control subsystem 103B may instruct, in response to the received first vehicle search request, the corresponding vehicle to whistle or flash or whistle and flash at the same time.

Further optionally, the vehicle remote control subsystem 103B may be further configured to instruct, in response to a received first unlocking request for the corresponding vehicle from the second terminal 102, the corresponding vehicle to perform an unlocking operation. For example, in the above embodiment, when the courier finds the corresponding vehicle, if there are no passengers or a driver in the vehicle, then in order to successfully complete pickup, the courier may operate the second terminal 102 such that the second terminal 102 sends the first unlocking request to the remote vehicle service system 103, and the vehicle remote control subsystem 103B may instruct, in response to the received first unlocking request, the corresponding vehicle to perform an unlocking operation, for example, opening a trunk.

It should be noted that the remote vehicle service system 103 may be implemented in a distributed or integrated server, or in the cloud, etc.

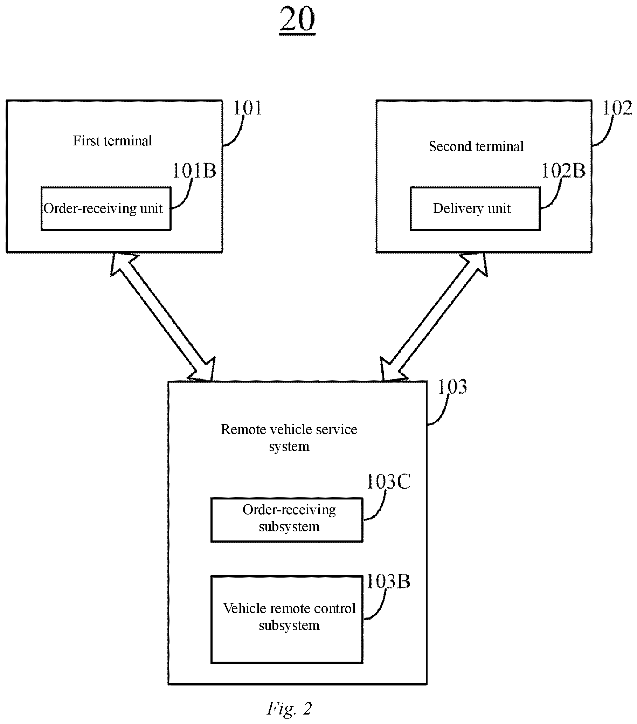

Correspondingly, next, a system for delivering a parcel to a vehicle according to an embodiment of the invention will be described with reference to FIG. 2.

As shown in FIG. 2, a system 20 for delivering a parcel to a vehicle also comprises a first terminal 101, a second terminal 102, and a remote vehicle service system 103. However, in the example system 20 shown in FIG. 2 for delivering a parcel to a vehicle, the first terminal 101 may be a terminal used by a user who waits for receiving a parcel, while the second terminal 102 may be a terminal used by a courier who delivers the parcel. It should be understood that the first terminal 101 in FIG. 1 and the first terminal 101 in FIG. 2 may be the same terminal used by the same user in the sending and receiving situation. Similarly, the second terminal 102 in FIG. 1 and the second terminal 102 in FIG. 2 may also be the same terminal used by the same courier in the sending and receiving situation. The remote vehicle service system 103 in FIG. 1 and the remote vehicle service system 103 in FIG. 2 may also be the same background system that can cope with both picking up a parcel from a vehicle and delivering a parcel to a vehicle.

In FIG. 2, in order to complete the delivery of a parcel to a vehicle, the first terminal 101 comprises the above first system that comprises an order-receiving unit 101B, wherein the order-receiving unit 101B may be configured to send an in-vehicle receiving instruction for a corresponding vehicle in response to an order-receiving notification from the third-party express system. For example, in one embodiment, when a merchant or a third party sends a parcel to a user by means of the third-party express system, the third-party express system sends an order-receiving notification via the remote vehicle service system 103 to the first terminal 101 used by the user who waits for receiving a parcel, and then the order-receiving unit 101B sends an in-vehicle receiving instruction for the corresponding vehicle in response to the order-receiving notification. In one example, in addition to the in-vehicle receiving instruction, the order-receiving unit 101B may also send information about the corresponding vehicle such as a license plate number, a vehicle color, and a vehicle type of the corresponding vehicle. In addition, for example, in one embodiment, the order-receiving unit 101B may be implemented by a hardware module such as a microprocessor, an integrated circuit, a programmable controller, or an arithmetic unit.

Optionally, the first system may further comprise a display unit (not shown), wherein the display unit may be configured to display, based on the order-receiving notification, selection information about whether a parcel needs to be delivered to a vehicle, to the user (first terminal user) who waits for receiving the parcel. In addition, for example, in one embodiment, the display unit may be implemented by any type of dynamic display capable of displaying a visual interface to the user, and may comprise any type of light emitting diode (LED), organic LED (OLED), cathode ray tube (CRT), liquid crystal display (LCD), plasma, electroluminescence (EL), electrowetting, MEMS or other display technologies.

Further optionally, the first system may further comprise an input unit (not shown), wherein the input unit may be used by the user who waits for receiving a parcel to input a selection result about whether the parcel needs to be delivered to the vehicle. Furthermore, when the user who waits for receiving a parcel selects to deliver the parcel to the vehicle, the order-receiving unit 101B sends the in-vehicle receiving instruction for the corresponding vehicle in response to the order-receiving notification from the third-party express system. For example, in one embodiment, the input unit may be implemented by a hardware module such as a touch display screen. Alternatively, in another embodiment, the input unit may also be implemented by a hardware module such as a physical button or a physical key.

It should be noted that the first system may be implemented in an electronic device such as a mobile phone or a PAD, the first system may be implemented as an application such as a first terminal APP shown in FIGs. 3 and 5 described later, and the application may be installed in the electronic device such as a mobile phone or a PAD.

As shown in FIG. 2, the remote vehicle service system 103 comprises an order-receiving subsystem 103B, wherein the order-receiving subsystem 103B may be configured to send, in response to the in-vehicle receiving instruction for the corresponding vehicle received from the first terminal 101, the in-vehicle receiving instruction to the third-party express system.

Optionally, the order-receiving subsystem 103 may be further configured to send, in response to the received in-vehicle receiving instruction from the first terminal 101, an address indicating a receiving vehicle position to the third-party express system together with the in-vehicle receiving instruction. It should be understood that, herein, the sent address indicating a receiving vehicle position may be an address pre-stored in the order-receiving subsystem 103, the current address of the receiving vehicle acquired by a GPS module of the order-receiving subsystem 103 when receiving the in-vehicle receiving instruction from the first terminal 101, etc.

As described above, the second terminal 102 may be a terminal used by the courier who delivers the parcel. In the example shown in FIG. 2, the second terminal 102 comprises the above second system that comprises a delivery unit 102B, wherein the delivery unit 102B may be configured to send, based on the received in-vehicle receiving instruction for the corresponding vehicle, a second vehicle search request for the corresponding vehicle to the remote vehicle service system 103. For example, in the above embodiment, when the courier receives the in-vehicle receiving instruction for the corresponding vehicle from the third-party express system, the courier may operate the second terminal 102, and the second terminal 102 sends, in response to the courier's operation, the second vehicle search request containing the in-vehicle receiving instruction for the corresponding vehicle to the remote vehicle service system 103. In addition, for example, in one embodiment, the delivery unit 102B may be implemented by a hardware module such as a microprocessor, an integrated circuit, a programmable controller, or an arithmetic unit.

Optionally, the second system may further comprise a receipt list information verification unit (not shown), wherein the receipt list information verification unit may be configured to verify security information related to a receipt list from the third-party express system. When the verification on the security information performed by the receipt list information verification unit succeeds, the delivery unit 102B sends the second vehicle search request for the corresponding vehicle to the remote vehicle service system 103 based on the received in-vehicle receiving instruction for the corresponding vehicle; otherwise, when the verification on the security information performed by the receipt list information verification unit fails, the second terminal 102 will prompt the courier that the verification information is incorrect or the like, then the courier needs to re-acquire and input security information related to the receipt list, and the delivery unit 102B starts to operate until the verification succeeds. In addition, for example, in one embodiment, the receipt list information verification unit may be implemented by a hardware module such as a microprocessor, an integrated circuit, a programmable controller, or an arithmetic unit.

It should be noted that the second system may also be implemented in an electronic device such as a mobile phone or a PAD, the second system may be implemented as an application such as vehicle search software APP shown in FIGs. 4 and 6 described later, and the application may be installed in the electronic device such as a mobile phone or a PAD.

For example, in the above embodiment, the courier may operate the second terminal 102 to open an express-to-vehicle delivery list, and then the second terminal 102 will prompt the courier to input a credential associated with the delivery list for verification, wherein the credential may comprise ID information of the courier, ID information of the second terminal 102, expected door-to-door delivery time, original data information such as an ECU version number and/or an NFC version number, etc. After the courier operates the second terminal 102 to provide the corresponding credential, the receipt list information verification unit will verify the credential provided by the courier. If the credential does not exist or the ID information of the courier and/or the ID information of the second terminal 102 in the credential are different from the ID information of the courier and/or the ID information of the second terminal 102 when the credential is applied for, the second terminal 102 will prompt the courier that the verification information is incorrect, he/she needs to re-apply for a credential, or the like, in which case the courier needs to re-acquire a credential. Otherwise, if there is no problem with the credential, the second terminal 102 will send the second vehicle search request for the corresponding vehicle to the remote vehicle service system 103.

Further, the order-receiving subsystem 103C may be further configured to associate a real-time receiving vehicle position of the corresponding vehicle in response to the received second vehicle search request for the corresponding vehicle from the second terminal 102. For example, in one embodiment, the order-receiving subsystem 103C may comprise a GPS positioning module, which is used to track the position of the corresponding vehicle in real time and provide the real-time position.

Further, the delivery unit 102B may be further configured to receive the real-time receiving vehicle position of the corresponding vehicle from the remote vehicle service system 103.

In addition, as shown in FIG. 2, the remote vehicle service system 103 may further comprise: a vehicle remote control subsystem 103B, and the vehicle remote control subsystem 103B is configured to control the corresponding vehicle based on the above in-vehicle receiving instruction.

Optionally, the vehicle remote control subsystem 103B may be further configured to instruct, in response to the received second vehicle search request, the corresponding vehicle to send a prompt signal. The prompt signal includes but is not limited to vehicle whistling, vehicle flashing, and the like. For example, in the above embodiment, when the courier arrives near the corresponding vehicle according to the real-time receiving vehicle position of the corresponding vehicle provided by the remote vehicle service system 103, in order to prevent the courier from spending too much time on vehicle search, the vehicle remote control subsystem 103B may instruct, in response to the received second vehicle search request, the corresponding vehicle to whistle or flash or whistle and flash at the same time.

Further optionally, the vehicle remote control subsystem 103B may be further configured to instruct, in response to a received second unlocking request for the corresponding vehicle from the second terminal 102, the corresponding vehicle to perform an unlocking operation. For example, in the above embodiment, when the courier finds the corresponding vehicle, if there are no passengers or a driver in the vehicle, then in order to successfully complete delivery, the courier may operate the second terminal 102 such that the second terminal 102 sends the second unlocking request to the remote vehicle service system 103, and the vehicle remote control subsystem 103B may instruct, in response to the received second unlocking request, the corresponding vehicle to perform an unlocking operation, for example, opening a trunk.

It should be noted that the remote vehicle service system 103 may be implemented in a distributed or integrated server, or in the cloud, etc.

Next, a method for picking up a parcel from a vehicle corresponding to the system 10 shown in FIG. 1 will be described with reference to FIGs. 3 and 4. FIG. 3 is an exemplary time sequence diagram of an order-placing phase in the process of picking up a parcel from a vehicle according to an embodiment of the invention, and FIG. 4 is an exemplary sequence diagram of a pickup phase in the process of picking up a parcel from a vehicle according to an embodiment of the invention.

In FIG. 3, the sending user corresponds to the user (the first terminal user) who needs to send a parcel mentioned above, the first terminal (comprising the first terminal APP) corresponds to the first terminal 101 shown in FIG. 1, the remote vehicle service system corresponds to the remote vehicle service system 103 shown in FIG. 1, and the third-party express system corresponds to the third-party express system mentioned above. In addition, in FIG. 4, the courier corresponds to the courier mentioned above, the express PDA device and vehicle search software correspond to the second terminal 102 shown in FIG. 1, the remote vehicle service system and the remote vehicle service system in FIG. 3 similarly correspond to the remote vehicle service system 103 shown in FIG. 1, and the vehicle corresponds to the corresponding vehicle mentioned above from which a parcel is picked up.

As shown in FIG. 3, the order-placing phase in the method for picking up a parcel from a vehicle comprises the following step: (1) The first terminal (exactly, the first terminal APP in FIG. 3) sends an order-placing request containing an in-vehicle pickup instruction for a corresponding vehicle (for example, the vehicle in FIG. 4). For example, in one embodiment, when the sending user needs to send a parcel and expects a courier to pick up the parcel to be sent from a vehicle, the sending user may operate the first terminal, and the first terminal sends, in response to the user's operation, an order-placing request containing an in-vehicle pickup instruction for a corresponding vehicle.

Optionally, the sending user may also enter an address indicating a pickup vehicle position when operating the first terminal, and the first terminal (exactly, the first terminal APP in FIG. 3) checks the validity of the input address. When a check result is that the address input by the user is valid, the first terminal will send the order-placing request containing the in-vehicle pickup instruction for the corresponding vehicle; otherwise, when the check result is that the address input by the user is invalid, the first terminal will return error information to the user by prompting the user that the address is invalid or the like, then the user needs to input an address again, and the first terminal starts to operate until the address is determined to be valid. It should be understood that the validity mentioned above includes but is not limited to correctness of an address input format, a correlation between each field of the input address information and a name of each information bar displayed on the first terminal, etc.

Furthermore, as shown in FIG. 3, the order-placing phase in the method for picking up a parcel from a vehicle may further comprise the following step: (2) The remote vehicle service system sends, in response to the order-placing request containing the in-vehicle pickup instruction for the corresponding vehicle received from the first terminal, the order-placing request to the third-party express system.

Optionally, the third-party express system may send, in response to the order-placing request received from the remote vehicle service system, a feedback message about order-placing success or the like to the remote vehicle service system, and in turn, the remote vehicle service system may send the feedback message to the first terminal so as to notify the sending user of the order-placing success.

Further optionally, the third-party express system may assign an in-vehicle pickup order to a specific courier, arrange a specific arrival pickup time and then send a message about successful assignment of the in-vehicle pickup order or the like to the remote vehicle service system, and in turn, the remote vehicle service system can send the message to the first terminal so as to notify the sending user that courier XX will arrive at the vehicle at time XX for pickup.

Further optionally, the first terminal may also send, in response to the received message about the successful assignment of the in-vehicle pickup order, a feedback message about notification success or the like to the remote vehicle service system, and in turn, the remote vehicle service system may also send the feedback message to the third-party express system.

Furthermore, as shown in FIG. 4, the pickup phase for picking up a parcel from a vehicle comprises the following step: (3) The second terminal sends, based on the received in-vehicle pickup instruction for the corresponding vehicle, a first vehicle search request for the corresponding vehicle to the remote vehicle service system. For example, in the above embodiment, when the courier is assigned a task of in-vehicle pickup from the corresponding vehicle by the third-party express system, the courier may send the first vehicle search request containing the in-vehicle pickup instruction for the corresponding vehicle to the second terminal by clicking vehicle search software in the second terminal, and the second terminal sends the first vehicle search request to the remote vehicle service system in response to the courier's operation.

Optionally, the second terminal may also verify security information related to a pickup list from the third-party express system. When the verification on the security information succeeds, the second terminal will send the first vehicle search request for the corresponding vehicle to the remote vehicle service system based on the received in-vehicle pickup instruction for the corresponding vehicle; otherwise, when the verification on the security information fails, the second terminal will prompt the courier that the verification information is incorrect or the like, then the courier needs to re-acquire and input security information related to the pickup list, and the second terminal starts to operate until the verification succeeds.

For example, in the above embodiment, the courier may operate the second terminal (exactly, an express PDA device installed with vehicle search software) to open an express-to-vehicle pickup list, then an application jump occurs inside the second terminal (exactly, the express PDA device), the application involving the pickup list sends a parcel number and a random number to the vehicle search software, and in response to this, the vehicle search software returns a credential request containing this random number to prompt the courier to input a credential associated with the pickup list for verification, wherein the credential may comprise ID information of the courier, ID information of the express PDA device used by the courier, expected door-to-door delivery time, original data information such as an ECU version number and/or an NFC version number, etc. After the courier operates the express PDA device to provide the corresponding credential, the vehicle search software will verify the credential provided by the courier. If the credential does not exist or the ID information of the courier and/or the ID information of the express PDA device used by the courier in the credential are different from the ID information of the courier and/or the ID information of the express PDA device used by the courier when the credential is applied for, the vehicle search software will return a prompt such as a credential error to the courier to remind the courier to re-acquire a credential according to the process of using the application for the first time. Otherwise, if there is no problem with the credential, the second terminal will send the first vehicle search request for the corresponding vehicle to the remote vehicle service system.

Furthermore, the pickup phase for picking up a parcel from a vehicle may further comprise the following step: (4) The remote vehicle service system associates a real-time pickup vehicle position of the corresponding vehicle in response to the received first vehicle search request for the corresponding vehicle (not shown). For example, in one embodiment, the remote vehicle service system may comprise a GPS positioning module, which is used to track the position of the corresponding vehicle in real time and provide the real-time position.

Furthermore, the pickup phase for picking up a parcel from a vehicle may further comprise the following step: (5) The second terminal receives the real-time pickup vehicle position of the corresponding vehicle from the remote vehicle service system (not shown).

Optionally, the remote vehicle service system may also control the corresponding vehicle based on the above in-vehicle pickup instruction.

As an example, the remote vehicle service system may further instruct, in response to the received first vehicle search request, the corresponding vehicle to send a prompt signal. The prompt signal includes but is not limited to vehicle whistling, vehicle flashing, and the like. For example, in the above embodiment, when the courier arrives near the vehicle according to the real-time pickup vehicle position of the corresponding vehicle provided by the remote vehicle service system, in order to prevent the courier from spending too much time on vehicle search, the remote vehicle service system may instruct, in response to the received first vehicle search request, the vehicle to whistle or flash or whistle and flash at the same time.

Optionally, in this example, after the vehicle sends the prompt to the courier by whistling or flashing or whistling and flashing at the same time, the vehicle may return a feedback message about execution success or the like to the remote vehicle service system, and in turn, the remote vehicle service system may send the feedback message to the second terminal so as to notify the courier that the prompt of the vehicle itself has been completed. Further, the courier may accurately find the vehicle according to the prompt of the vehicle itself.

Further, in the above example, the remote vehicle service system may further instruct, in response to a received first unlocking request for the corresponding vehicle from the second terminal, the corresponding vehicle to perform an unlocking operation. For example, in the above embodiment, when the courier finds the corresponding vehicle, if there are no passengers or a driver in the vehicle, then in order to successfully complete pickup, the courier may send the first unlocking request for opening a trunk or the like to the second terminal by clicking the vehicle search software in the second terminal, the second terminal sends the first unlocking request to the remote vehicle service system in response to the courier's operation, and the remote vehicle service system may instruct, in response to the received first unlocking request, the vehicle to perform an unlocking operation, for example, opening the trunk.

Optionally, in this example, after the trunk of the vehicle is opened, the vehicle may return a feedback message about execution success or the like to the remote vehicle service system, and in turn, the remote vehicle service system may send the feedback message to the second terminal so as to notify the courier that the unlocking of the vehicle itself has been completed. Further, the courier may take out the parcel to be sent from the trunk. After the parcel is picked up, the courier may close the trunk, and the vehicle may return a message that the trunk is closed or the like to the remote vehicle service system.

By performing the above steps, the process for picking up a parcel from a vehicle according to an embodiment of the invention can be completed.

Finally, a method for delivering a parcel to a vehicle corresponding to the system 20 shown in FIG. 2 will be described with reference to FIGs. 5 and 6. FIG. 5 is an exemplary time sequence diagram of a notification phase in the process of delivering a parcel to a vehicle according to an embodiment of the invention, and FIG. 6 is an exemplary sequence diagram of a delivery phase in the process of delivering a parcel to a vehicle according to an embodiment of the invention.

In FIG. 5, the sending user corresponds to the user (first terminal user) who waits for receiving a parcel mentioned above, the first terminal comprising a first terminal APP corresponds to the first terminal 101 shown in FIG. 2, the remote vehicle service system corresponds to the remote vehicle service system 103 shown in FIG. 2, and the third-party express system corresponds to the third-party express system mentioned above. In addition, in FIG. 6, the courier corresponds to the courier mentioned above, the express PDA device and vehicle search software correspond to the second terminal 102 shown in FIG. 2, the remote vehicle service system and the remote vehicle service system in FIG. 5 similarly correspond to the remote vehicle service system 103 shown in FIG. 2, and the vehicle corresponds to the corresponding vehicle mentioned above to which a parcel is delivered.

As shown in FIG. 5, the notification phase in the method for delivering a parcel to a vehicle comprises the following step: (1) The first terminal (exactly, the first terminal APP in FIG. 3) sends, in response to an order-receiving notification from the third-party express system, an in-vehicle receiving instruction for a corresponding vehicle (for example, the vehicle in FIG. 4). For example, in one embodiment, when a merchant or a third party sends a parcel to a sending user by means of the third-party express system, the third-party express system sends a notification of delivering a parcel to a user's city or the like to the remote vehicle service system, and then the remote vehicle service system sends a notification that the parcel can be delivered to the vehicle or the like to the first terminal so as to notify the sending user that a parcel is to be received. Meanwhile, optionally, the first terminal feeds back a message about notification success or the like to the remote vehicle service system, and the remote vehicle service system sends such a feedback message to the third-party express system. In addition, the first terminal also sends an in-vehicle receiving instruction for the corresponding vehicle in response to such an order-receiving notification.

Optionally, the first terminal may also display, to the sending user based on the order-receiving notification, selection information about whether the parcel needs to be delivered to the vehicle. Further optionally, the sending user may select whether to deliver the parcel to the home/company or the vehicle by inputting a selection result on the first terminal about whether the parcel needs to be delivered to the vehicle. Furthermore, when the sending user selects to deliver the parcel to the vehicle, the first terminal sends, in response to the order-receiving notification from the third-party express system, the in-vehicle receiving instruction for the corresponding vehicle to the remote vehicle service system.

As shown in FIG. 5, the notification phase in the method for delivering a parcel to a vehicle comprises the following step: (2) The remote vehicle service system further sends the in-vehicle receiving instruction to the third-party express system.

Optionally, the remote vehicle service system may further send, in response to the received in-vehicle receiving instruction from the first terminal, an address indicating a receiving vehicle position to the third-party express system together with the in-vehicle receiving instruction. It should be understood that, herein, the sent address indicating a receiving vehicle position may be an address pre-stored in the remote vehicle service system, the current address of the receiving vehicle acquired by a GPS module of the remote vehicle service system when receiving the in-vehicle receiving instruction from the first terminal, etc.

Optionally, the third-party express system may send, in response to the above in-vehicle receiving instruction (and the address indicating a receiving vehicle position) received from the remote vehicle service system, a feedback message about success or the like to the remote vehicle service system, and in turn, the remote vehicle service system may send the feedback message to the first terminal so as to notify the sending user that the third-party express system succeeds in receiving the instruction.

Furthermore, as shown in FIG. 6, the delivery phase for delivering a parcel to a vehicle comprises the following step: (3) The second terminal sends, based on the received in-vehicle receiving instruction for the corresponding vehicle, a second vehicle search request for the corresponding vehicle. For example, in the above embodiment, when the courier is assigned, by the third-party express system, a task of delivering a parcel to a corresponding vehicle, the courier may send the second vehicle search request containing the in-vehicle receiving instruction for the corresponding vehicle to the second terminal by clicking the vehicle search software in the second terminal, and the second terminal sends the second vehicle search request to the remote vehicle service system in response to the courier's operation.

Optionally, the second terminal may further verify security information related to a receipt list from the third-party express system. When the verification on the security information succeeds, the second terminal will send the second vehicle search request for the corresponding vehicle to the remote vehicle service system based on the received in-vehicle receiving instruction for the corresponding vehicle; otherwise, when the verification on the security information fails, the second terminal will prompt the courier that the verification information is incorrect or the like, then the courier needs to re-acquire and input security information related to the receipt list, and the second terminal starts to operate until the verification succeeds.

For example, in the above embodiment, the courier may operate the second terminal (exactly, an express PDA device installed with vehicle search software) to open an express-to-vehicle delivery list, then an application jump occurs inside the second terminal (exactly, the express PDA device), the application involving the receipt list sends a parcel number and a random number to the vehicle search software, and in response to this, the vehicle search software returns a credential request containing this random number to prompt the courier to input a credential associated with the receipt list for verification, wherein the credential may comprise ID information of the courier, ID information of the express PDA device used by the courier, expected door-to-door delivery time, original data information such as an ECU version number and/or an NFC version number, etc. After the courier operates the express PDA device to provide the corresponding credential, the vehicle search software will verify the credential provided by the courier. If the credential does not exist or the ID information of the courier and/or the ID information of the express PDA device used by the courier in the credential are different from the ID information of the courier and/or the ID information of the express PDA device used by the courier when the credential is applied for, the vehicle search software will return a prompt such as a credential error to the courier to remind the courier to re-acquire a credential according to the process of using the application for the first time. Otherwise, if there is no problem with the credential, the second terminal will send the second vehicle search request for the corresponding vehicle to the remote vehicle service system.

Furthermore, the delivery phase for delivering a parcel to a vehicle may further comprise the following step: (4) The remote vehicle service system associates a real-time receiving vehicle position of a corresponding vehicle in response to the received second vehicle search request for the corresponding vehicle from the second terminal (not shown). For example, in one embodiment, the remote vehicle service system may comprise a GPS positioning module, which is used to track the position of the corresponding vehicle in real time and provide the real-time position.

Furthermore, the delivery phase for delivering a parcel to a vehicle may further comprise the following step: (5) The second terminal receives the real-time receiving vehicle position of the corresponding vehicle from the remote vehicle service system (not shown).

Optionally, the remote vehicle service system may also control the corresponding vehicle based on the above in-vehicle receiving instruction.

As an example, the remote vehicle service system may further instruct, in response to the received second vehicle search request, the corresponding vehicle to send a prompt signal. The prompt signal includes but is not limited to vehicle whistling, vehicle flashing, and the like. For example, in the above embodiment, when the courier arrives near the vehicle according to the real-time receiving vehicle position of the corresponding vehicle provided by the remote vehicle service system, in order to prevent the courier from spending too much time on vehicle search, the remote vehicle service system may instruct, in response to the received second vehicle search request, the vehicle to whistle or flash or whistle and flash at the same time.

Optionally, in this example, after the vehicle sends the prompt to the courier by whistling or flashing or whistling and flashing at the same time, the vehicle may return a feedback message about execution success or the like to the remote vehicle service system, and in turn, the remote vehicle service system may send the feedback message to the second terminal so as to notify the courier that the prompt of the vehicle itself has been completed. Further, the courier may accurately find the vehicle according to the prompt of the vehicle itself.

Further, in the above example, the remote vehicle service system may further instruct, in response to a received second unlocking request for the corresponding vehicle from the second terminal, the corresponding vehicle to perform an unlocking operation. For example, in the above embodiment, when the courier finds the corresponding vehicle, if there are no passengers or a driver in the vehicle, then in order to successfully complete receiving, the courier may send the second unlocking request for opening a trunk or the like to the second terminal by clicking the vehicle search software in the second terminal, the second terminal sends the second unlocking request to the remote vehicle service system in response to the courier's operation, and the remote vehicle service system may instruct, in response to the received second unlocking request, the vehicle to perform an unlocking operation, for example, opening the trunk.

Optionally, in this example, after the trunk of the vehicle is opened, the vehicle may return a feedback message about execution success or the like to the remote vehicle service system, and in turn, the remote vehicle service system may send the feedback message to the second terminal so as to notify the courier that the unlocking of the vehicle itself has been completed. Further, the courier may put the parcel to be received into the trunk. After the parcel is delivered, the courier may close the trunk, and the vehicle may return a message that the trunk is closed or the like to the remote vehicle service system.

By performing the above steps, the process for delivering a parcel to a vehicle according to an embodiment of the invention can be completed.

Although descriptions are given above centered on the system and method for picking up a parcel from a vehicle, and a system and method for delivering a parcel to a vehicle, those of ordinary skill in the art should understand that the invention is not limited to the above embodiments, and the invention can be implemented in many other forms without departing from the idea and scope thereof. Therefore, the presented examples and implementations are regarded to be schematic rather than restrictive, and without departing from the spirit and scope of the invention that are defined by the appended claims, the invention may cover various changes and replacements.

## Claims

1. A system for picking up a parcel from a vehicle, **characterized by** comprising a first terminal, a second terminal, and a remote vehicle service system, wherein
the first terminal comprises: an order-placing unit configured to send an order-placing request containing an in-vehicle pickup instruction for a corresponding vehicle;
the second terminal comprises: a pickup unit configured to send, based on the received in-vehicle pickup instruction for the corresponding vehicle, a first vehicle search request for the corresponding vehicle to the remote vehicle service system, and receive a real-time pickup vehicle position of the corresponding vehicle; and
the remote vehicle service system comprises: an order-placing subsystem configured to send the order-placing request to a third-party express system, and associate the real-time pickup vehicle position of the corresponding vehicle in response to the received first vehicle search request for the corresponding vehicle from the second terminal.

2. The system of claim 1, **characterized in that** the remote vehicle service system further comprises:
a vehicle remote control subsystem configured to control the corresponding vehicle based on the in-vehicle pickup instruction.

3. The system of claim 2, **characterized in that** the vehicle remote control subsystem instructs, in response to the received first vehicle search request, the corresponding vehicle to send a prompt signal.

4. The system of claim 3, **characterized in that** the vehicle remote control subsystem instructs, in response to a received first unlocking request for the corresponding vehicle from the second terminal, the corresponding vehicle to perform an unlocking operation.

5. The system of any one of claims 1 to 4, **characterized in that** the first terminal further comprises:
a first input unit used by a first terminal user to input an address indicating a pickup vehicle position; and
an address check unit configured to check the validity of the input address,
wherein the order-placing unit sends, when the input address is checked to be valid, the order-placing request containing the in-vehicle pickup instruction for the corresponding vehicle.

6. The system of any one of claims 1 to 4, **characterized in that**
the second terminal further comprises: a pickup list information verification unit configured to verify security information related to a pickup list from the third-party express system,
wherein the pickup unit sends, based on the received in-vehicle pickup instruction for the corresponding vehicle when the verification on the security information succeeds, the first vehicle search request for the corresponding vehicle to the remote vehicle service system.

7. A system for delivering a parcel to a vehicle, **characterized by** comprising a first terminal, a second terminal, and a remote vehicle service system, wherein
the first terminal comprises: an order-receiving unit configured to send an in-vehicle receiving instruction for a corresponding vehicle in response to an order-receiving notification from a third-party express system;
the second terminal comprises: a delivery unit configured to send, based on the received in-vehicle receiving instruction for the corresponding vehicle, a second vehicle search request for the corresponding vehicle to the remote vehicle service system, and receive a real-time receiving vehicle position of the corresponding vehicle; and
the remote vehicle service system comprises: an order-receiving subsystem configured to send the in-vehicle receiving instruction to the third-party express system, and associate the real-time receiving vehicle position of the corresponding vehicle in response to the received second vehicle search request for the corresponding vehicle from the second terminal.

8. The system of claim 7, **characterized in that** the remote vehicle service system further comprises: a vehicle remote control subsystem configured to control the corresponding vehicle based on the in-vehicle receiving instruction.

9. The system of claim 8, **characterized in that** the vehicle remote control subsystem instructs, in response to the received second vehicle search request, the corresponding vehicle to send a prompt signal.

10. The system of claim 9, **characterized in that** the vehicle remote control subsystem instructs, in response to a received second unlocking request for the corresponding vehicle from the second terminal, the corresponding vehicle to perform an unlocking operation.

11. The system of any one of claims 7 to 10, **characterized in that** the first terminal further comprises:
a display unit configured to display, to a first terminal user based on the order-receiving notification, selection information about whether a parcel needs to be delivered to the vehicle; and
an input unit used by the first terminal user to input a selection result about whether the parcel needs to be delivered to the vehicle,
wherein the order-receiving unit sends the in-vehicle receiving instruction for the corresponding vehicle in response to the order-receiving notification from the third-party express system when the first terminal user selects to deliver the parcel to the vehicle.

12. The system of any one of claims 7 to 10, **characterized in that** the order-receiving subsystem sends, in response to the received in-vehicle receiving instruction from the first terminal, an address indicating a receiving vehicle position to the third-party express system together with the in-vehicle receiving instruction.

13. The system of any one of claims 7 to 10, **characterized in that**
the second terminal further comprises: a receipt list information verification unit configured to verify security information related to a receipt list from the third-party express system,
wherein the delivery unit sends, based on the received in-vehicle receiving instruction for the corresponding vehicle when the verification on the security information succeeds, the second vehicle search request for the corresponding vehicle to the remote vehicle service system.

14. A method for picking up a parcel from a vehicle, **characterized by** comprising the steps of:
sending an order-placing request containing an in-vehicle pickup instruction for a corresponding vehicle;
sending the order-placing request to a third-party express system;
sending, based on the received in-vehicle pickup instruction for the corresponding vehicle, a first vehicle search request for the corresponding vehicle;
associating a real-time pickup vehicle position of the corresponding vehicle in response to the received first vehicle search request for the corresponding vehicle; and
receiving the real-time pickup vehicle position of the corresponding vehicle.

15. The method of claim 14, **characterized by** further comprising the step of: controlling the corresponding vehicle based on the in-vehicle pickup instruction.

16. The method of claim 15, **characterized by** further comprising the step of: instructing, in response to the received first vehicle search request, the corresponding vehicle to send a prompt signal.

17. The method of claim 16, **characterized by** further comprising the step of: instructing, in response to a received first unlocking request for the corresponding vehicle, the corresponding vehicle to perform an unlocking operation.

18. The method of any one of claims 14 to 17, **characterized by** further comprising the steps of:
inputting an address indicating a pickup vehicle position;
checking the validity of the input address; and
sending, when the input address is checked to be valid, the order-placing request containing the in-vehicle pickup instruction for the corresponding vehicle.

19. The method of any one of claims 14 to 17, **characterized by** further comprising the steps of:
verifying security information related to a pickup list from the third-party express system; and
sending, based on the received in-vehicle pickup instruction for the corresponding vehicle when the verification on the security information succeeds, the first vehicle search request for the corresponding vehicle.

20. A method for delivering a parcel to a vehicle, **characterized by** comprising the steps of:
sending an in-vehicle receiving instruction for a corresponding vehicle in response to an order-receiving notification from a third-party express system;
sending the in-vehicle receiving instruction to the third-party express system;
sending, based on the received in-vehicle receiving instruction for the corresponding vehicle, a second vehicle search request for the corresponding vehicle;
associating a real-time receiving vehicle position of the corresponding vehicle in response to the received second vehicle search request for the corresponding vehicle from a second terminal; and
receiving the real-time receiving vehicle position of the corresponding vehicle.

21. The method of claim 20, **characterized by** further comprising the step of: controlling the corresponding vehicle based on the in-vehicle receiving instruction.

22. The method of claim 21, **characterized by** further comprising the step of: instructing, in response to the received second vehicle search request, the corresponding vehicle to send a prompt signal.

23. The method of claim 22, **characterized by** further comprising the step of: instructing, in response to a received second unlocking request for the corresponding vehicle, the corresponding vehicle to perform an unlocking operation.

24. The method of any one of claims 20 to 23, **characterized by** further comprising the steps of:
displaying, based on the order-receiving notification, selection information about whether a parcel needs to be delivered to the vehicle;
inputting a selection result about whether the parcel needs to be delivered to the vehicle; and
sending the in-vehicle receiving instruction for the corresponding vehicle in response to the order-receiving notification from the third-party express system when selecting to deliver the parcel to the vehicle.

25. The method of any one of claims 20 to 23, **characterized in that**
in response to the received in-vehicle receiving instruction from a first terminal, an address indicating a receiving vehicle position is sent to the third-party express system together with the in-vehicle receiving instruction.

26. The method of any one of claims 20 to 23, **characterized by** further comprising the steps of:
verifying security information related to a receipt list from the third-party express system; and
sending, based on the received in-vehicle receiving instruction for the corresponding vehicle when the verification on the security information succeeds, the second vehicle search request for the corresponding vehicle.

27. A remote vehicle service system for picking up a parcel from a vehicle and/or delivering a parcel to a vehicle, **characterized by** comprising:
an order-placing subsystem configured to send an order-placing request from a first terminal to a third-party express system, and associate a real-time pickup vehicle position of a corresponding vehicle in response to a received first vehicle search request for the corresponding vehicle from a second terminal; and/or
an order-receiving subsystem configured to send an in-vehicle receiving instruction from the first terminal to the third-party express system, and associate a real-time receiving vehicle position of a corresponding vehicle in response to a received second vehicle search request for the corresponding vehicle from the second terminal.

28. The remote vehicle service system of claim 27, **characterized by** further comprising:
a vehicle remote control subsystem configured to control the corresponding vehicle based on an in-vehicle pickup instruction from the first terminal, and/or control the corresponding vehicle based on the in-vehicle receiving instruction from the first terminal.

29. The remote vehicle service system of claim 28, **characterized in that**
the vehicle remote control subsystem instructs, in response to the received first vehicle search request, the corresponding vehicle to send a prompt signal, and/or the vehicle remote control subsystem instructs, in response to the received second vehicle search request, the corresponding vehicle to send a prompt signal.

30. The remote vehicle service system of claim 29, **characterized in that**
the vehicle remote control subsystem instructs, in response to a received first unlocking request for the corresponding vehicle from the second terminal, the corresponding vehicle to perform an unlocking operation, and/or the vehicle remote control subsystem instructs, in response to a received second unlocking request for the corresponding vehicle from the second terminal, the corresponding vehicle to perform an unlocking operation.

31. A remote vehicle service method for picking up a parcel from a vehicle and/or delivering a parcel to a vehicle, **characterized by** comprising:
an order-placing step for sending an order-placing request from a first terminal to a third-party express system, and associating a real-time pickup vehicle position of a corresponding vehicle in response to a received first vehicle search request for the corresponding vehicle from a second terminal; and/or
an order-receiving step for sending an in-vehicle receiving instruction from the first terminal to the third-party express system, and associating a real-time receiving vehicle position of a corresponding vehicle in response to a received second vehicle search request for the corresponding vehicle from the second terminal.

32. The remote vehicle service method of claim 31, **characterized by** further comprising:
a vehicle remote control step for controlling the corresponding vehicle based on an in-vehicle pickup instruction from the first terminal, and/or controlling the corresponding vehicle based on the in-vehicle receiving instruction from the first terminal.

33. The remote vehicle service method of claim 32, **characterized in that**
the vehicle remote control step comprises instructing, in response to the received first vehicle search request, the corresponding vehicle to send a prompt signal, and/or the vehicle remote control step comprises instructing, in response to the received second vehicle search request, the corresponding vehicle to send a prompt signal.

34. The remote vehicle service method of claim 33, **characterized in that**
the vehicle remote control step comprises instructing, in response to a received first unlocking request for the corresponding vehicle from the second terminal, the corresponding vehicle to perform an unlocking operation, and/or the vehicle remote control step comprises instructing, in response to a received second unlocking request for the corresponding vehicle from the second terminal, the corresponding vehicle to perform an unlocking operation.
